# EUROPÄISCHE PATENTSCHRIFT

(11) **EP 2 927 553 B1**
(45) Veröffentlichungstag und Bekanntmachung des Hinweises auf die Patenterteilung: **13.06.2018**
(21) Anmeldenummer: 15159235.9
(22) Anmeldetag: 16.03.2015
(51) Int. Cl.: F16L 19/02

(54) **Anschluss, Fitting und Herstellungsverfahren**
Connection, fitting and manufacturing method
Raccordement, raccord et procédé de fabrication

(30) Priorität: 31.03.2014 DE 202014101522 U
(43) Veröffentlichungstag der Anmeldung: 07.10.2015
(73) Patentinhaber: Uponor Innovation AB, 73061 Virsbo (SE)
(72) Erfinder: Hallen, Mats, 73061 Virsbo (SE)
(74) Vertreter: Epping - Hermann - Fischer

(56) Entgegenhaltungen:
- EP-A2- 1 760 382
- EP-B1- 2 213 923
- WO-A1-2004/027305
- DE-A1- 3 714 723
- DE-A1- 4 206 309
- US-A- 5 529 348
- US-A- 5 775 743
- US-A1- 2011 121 566
- US-B1- 6 412 832

## Beschreibung

Die vorliegende Erfindung betrifft einen Anschluss, insbesondere einen Rohranschluss, umfassend einen Anschlusskörper und eine an dem Anschlusskörper drehbar festgelegte Überwurfmutter. Darüber hinaus betrifft die Erfindung ein Fitting mit einem derartigen Anschluss und ein Verfahren zum Herstellen eines derartigen Anschlusses.

Rohranschlüsse mit einem Anschlusskörper und einer an dem Anschlusskörper drehbar festgelegten Überwurfmutter sind aus dem Stand der Technik bekannt. Insbesondere offenbart die EP 2 213 923 B1 einen Anschluss in Form eines Drehgelenks, umfassend ein Rohrteil mit einem ersten Ende und einem zweiten Ende sowie eine Überwurfmutter mit einem ersten Ende und einem zweiten Ende. Dabei wird die Überwurfmutter auf dem Rohrteil so positioniert, dass das erste Ende der Überwurfmutter mit dem ersten Ende des Rohrteils eine Drehverbindung bildet. Hierzu weisen die Überwurfmutter und das Rohrteil jeweils mindestens einen vorspringenden Rand auf, um eine Trennung der Überwurfmutter von dem Rohrteil zu verhindern. Durch die vorspringenden Ränder kann eine direkte Schnappverbindung zwischen dem Rohrteil und der Überwurfmutter hergestellt werden.

Bei dem aus dem Stand der Technik bekannten Drehgelenk ist sowohl das Rohrteil als auch die Überwurfmutter aus einem Kunststoffwerkstoff hergestellt.

Obwohl Kunststoffwerkstoffe eine Vielzahl von Vorteilen aufweisen, unter anderem niedrige Herstellungskosten,

Leichtigkeit und Korrosionsbeständigkeit, gibt es jedoch einige Anwendungsbereiche, in denen reine Kunststoffanschlüsse entweder ungeeignet oder ungewünscht sind. Ein Grund hierfür ist unter anderem die geringere Härte der meisten Kunststoffmaterialien gegenüber üblichen Metallmaterialien, wie beispielsweise Messing.

Aus der US 5,775,743 A, der US 2011/121566 A1, der WO 2004/027305 A1, der DE 37 14 723 A1 und der EP 1 760 382 A2 sind verschiedene Rohr-Anschlüsse zwischen einem ersten Rohr und einem zweiten Rohr mit einem externen Gewinde bekannt. Die Anschlüsse umfassen jeweils eine Mutter mit einem internen Gewinde, das mit dem externen Gewinde des zweiten Rohres zusammenwirkt, und eine ringförmige Einlage. Die Mutter wird auf das erste Rohr geschoben.

Ein ähnlicher Anschluss für metallische Rohre ist aus der US 5,529,348 A bekannt.

Nachteilig an dieser Art von Rohr-Anschlüssen ist, dass die Mutter während der Montage am ersten Rohr axial beweglich ist, was die Montage umständlicher machen kann.

Aus der US 6,412,832 B1 ist eine selbstbördelnde Rohrverbindung aus einen Kunststoffmaterial bekannt, die sich zum Verbinden von unterschiedlichen Segmenten eines Rohres eignet. Die Rohrverbindung umfasst einen Anschlusskörper mit einem aufgeweiteten Ende und eine Überwurfmutter. Beim Zusammenbau der Rohrverbindung wird ein dem aufgeweiteten Ende des Anschlusskörpers gegenüberliegendes Ende durch die Überwurfmutter geführt.

Aus der DE 42 06 309 A1 ist eine Vorrichtung zum koaxialen Verbinden von rohrförmigen Teilen mit einem zwischen den Stirnseiten der rohrförmigen Teile angeordneten Dichtungsring bekannt, mit einem Außengewinde auf dem ersten rohrförmigen Teil, mit einer äußeren Stützschulter auf dem zweiten rohrförmigen Teil und mit einer Überwurfmutter mit Innengewinde und einer inneren ringförmigen Ausnehmung für die Aufnahme eines Stützringes, der einen axialen Anschlag bildet und elastisch zusammendrückbar ist. Der als metallisches Normteil verfügbare Stützring wird in einem Bereich einer äußeren Ringnut von Hand oder mit Hilfe eines Werkzeuges zusammengedrückt.

Eine Aufgabe der vorliegenden Erfindung liegt darin, einen alternativen Anschluss, insbesondere einen Rohranschluss, zu beschreiben, der eine einfache und sichere Festlegung einer Überwurfmutter an einem Anschlusskörper aus einem Kunststoffwerkstoff gestattet. Bevorzugt soll der beschriebene Anschluss eine Kombination unterschiedlicher Materialien, insbesondere von Kunststoff- und Metallwerkstoffen, ermöglichen.

Gemäß einem ersten Aspekt der Erfindung wird ein Anschluss, insbesondere ein Rohranschluss, umfassend einen aus einem Kunststoffwerkstoff hergestellten Anschlusskörper mit einer Stirnseite und wenigstens einem stirnseitig angeordneten, vorspringenden Rand und einem in axialer Richtung dahinterliegenden Haltebereich offenbart. Der Anschluss umfasst des Weiteren eine über den Anschlusskörper geschobene Überwurfmutter mit einer ringförmigen Vertiefung in einem dem Haltebereichs des Anschlusskörpers gegenüberliegenden Bereich und einem in der ringförmigen Vertiefung zwischen dem Anschlusskörper und der Überwurfmutter angeordneten Haltering, der die Überwurfmutter drehbar an dem Anschlusskörper festlegt. Der vorspringende Rand ist in Form eines ringartigen Flansches ausgestaltet und der Innendurchmesser der Überwurfmutter ist geringfügig größer als der Außendurchmesser des vorspringenden Rands, sodass die Überwurfmutter über die Stirnseite auf den Anschlusskörper geschoben werden kann. Die Überwurfmutter weist eine Fase im Bereich einer Rückseite auf.

Durch Verwendung eines Halterings und einer korrespondierenden Vertiefung in einer Überwurfmutter kann eine Oberfläche, mittels derer die Überwurfmutter an dem Anschlusskörper festgelegt ist, gegenüber der Schnappverbindung des bekannten Drehgelenks vergrößert werden. Der beschriebene Anschluss gestattet zudem die Kombination von einem Anschlusskörper und einer Überwurfmutter aus unterschiedlichen Materialien. Die Fase hilft beim Einführen des Halterings von der Rückseite der Überwurfmutter in die ringförmige Vertiefung.

Der genannte Anschluss eignet sich unter anderem für eine aus einem Metallwerkstoff, insbesondere Messing, gefertigte Überwurfmutter. Alternativ ist auch die Verwendung von relativ harten Kunststoffwerkstoffen möglich. Der Haltering kann aus einem Polymerwerkstoff bestehen, insbesondere einem Polyamid (PA) wie 6/6-Nylon oder Polyphenylensulfon (PPSU). Alternativ ist auch die Verwendung von korrosionsbeständigen Metallwerkstoffen möglich. Der Anschlusskörper kann ebenfalls aus einem Polymerwerkstoff, insbesondere einem Polysulfonwerkstoff, wie zum Beispiel Polyphenylensulfon (PPSU) hergestellt sein. Der modulare Aufbau des Anschlusses erlaubt eine optimierte Wahl der einzelnen Werkstoffe.

Gemäß einer vorteilhaften Ausgestaltung umfasst der Haltering einen geschlitzten, elastischen Ringkörper, wobei sich der Ringkörper über einen Winkelbereich von weniger als 360°, insbesondere über einen Winkelbereich zwischen 300 und 350° erstreckt. Ein derartiger Ringkörper erlaubt eine einfache Expansion und Kompression des Halterings, um diesen einfach in die Vertiefung der Überwurfmutter einführen zu können.

Gemäß einer vorteilhaften Ausgestaltung weist der Anschlusskörper in dem Haltebereich eine zumindest teilweise umlaufende Wulst und wenigstens eine zwischen der Wulst und dem vorspringenden Rand angeordnete Vertiefung auf. Durch die Wulst und die Vertiefung wird der Anschlusskörper sicher in einer vorbestimmten Position zum Verschrauben der Überwurfmutter mit einem Gegenstück gehalten.

Gemäß einer vorteilhaften Ausgestaltung umfasst der Anschluss des Weiteren eine auf einer Stirnseite des Anschlusskörpers innerhalb der Überwurfmutter angeordnete Dichtung. Somit kann eine flüssigkeitsdichte Verbindung zwischen dem Anschluss und einem Gegenstück hergestellt werden.

Gemäß einem zweiten Aspekt der Erfindung wird ein Fitting für eine Rohrverbindung mit einem Grundkörper und wenigstens einem mit dem Grundkörper verbundenen Anschluss gemäß dem ersten Aspekt beschrieben.

Gemäß einem dritten Aspekt der Erfindung wird ein Verfahren zum Herstellen eines Anschlusses beschrieben. Das Verfahren umfasst die Schritte:
- Bereitstellen eines Anschlusskörpers mit einer Stirnseite und wenigstens einem stirnseitig angeordneten, vorspringenden Rand in Form eines ringartigen Flansches und einem in axialer Richtung dahinterliegenden Haltebereich,
- axiales Aufschieben einer Überwurfmutter mit einer ringförmigen Vertiefung von der Stirnseite des Anschlusskörpers auf den Anschlusskörper, wobei der Innendurchmesser der Überwurfmutter geringfügig größer ist als der Außendurchmesser des vorspringenden Rands und
- axiales Einpressen eines Halterings von einer der Stirnseite des Anschlusskörpers gegenüberliegenden Rückseite der Überwurfmutter in die ringförmige Vertiefung durch Komprimieren des Halterings mittels einer an der Rückseite der Überwurfmutter angebrachten Fase, sodass die Überwurfmutter drehbar an dem Anschlusskörper gelagert ist.

Durch die oben genannten Verfahrensschritte kann ein Anschluss gemäß dem ersten Aspekt der Erfindung hergestellt werden.

Durch ein stirnseitiges Ansetzen eines Gegenstückes mit einem zu einem Gewinde der Überwurfmutter komplementären Gegengewinde, insbesondere eines Rohrendes oder eines Fittings, und ein Anziehen der Überwurfmutter kann das Gegenstück an dem Anschluss angeschlossen werden.

Weitere vorteilhafte Ausgestaltungen sind in den abhängigen Patentansprüchen sowie der nachfolgenden Beschreibung von Ausführungsbeispielen angegeben. Nachfolgend werden zwei Ausführungsbeispiele der Erfindung anhand der angehängten Figuren im Detail beschrieben. Zum besseren Verständnis sind funktionsgleiche Teile unterschiedlicher Ausführungsbeispiele mit denselben Bezugszeichen versehen. In den Figuren zeigen:
- Figur 1: eine Schnittdarstellung eines Anschlusses gemäß einer ersten Ausgestaltung,
- Figur 2: eine Seitenansicht des Anschlusses gemäß der ersten Ausgestaltung,
- Figur 3: zwei Ansichten einer Überwurfmutter gemäß der ersten Ausgestaltung,
- Figur 4: zwei Ansichten eines Halterings gemäß der ersten Ausgestaltung,
- Figur 5: eine erste Schnittdarstellung eines Anschlusses gemäß einer zweiten Ausgestaltung und
- Figur 6: eine zweite Schnittdarstellung eines Anschlusses gemäß der zweiten Ausgestaltung.

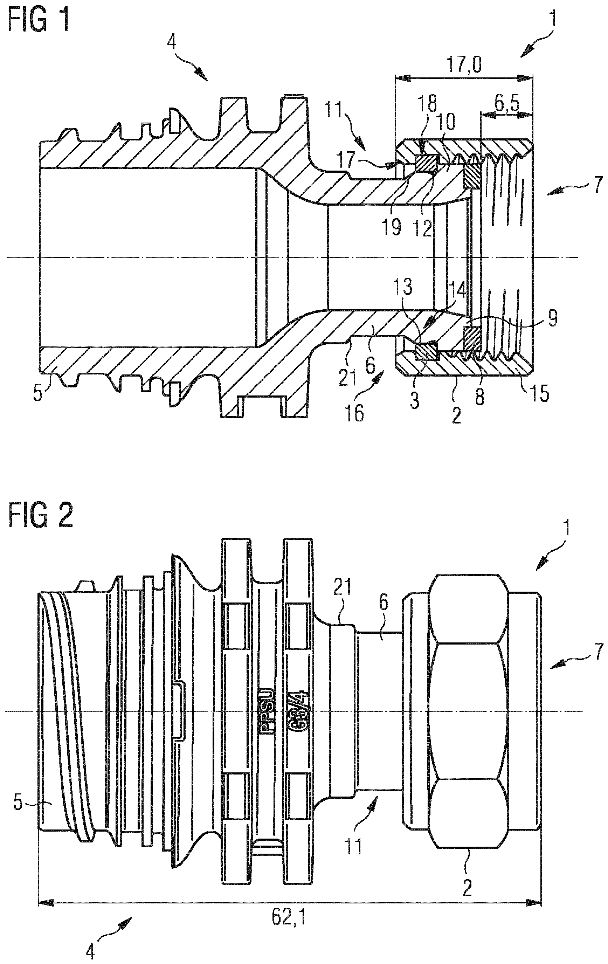

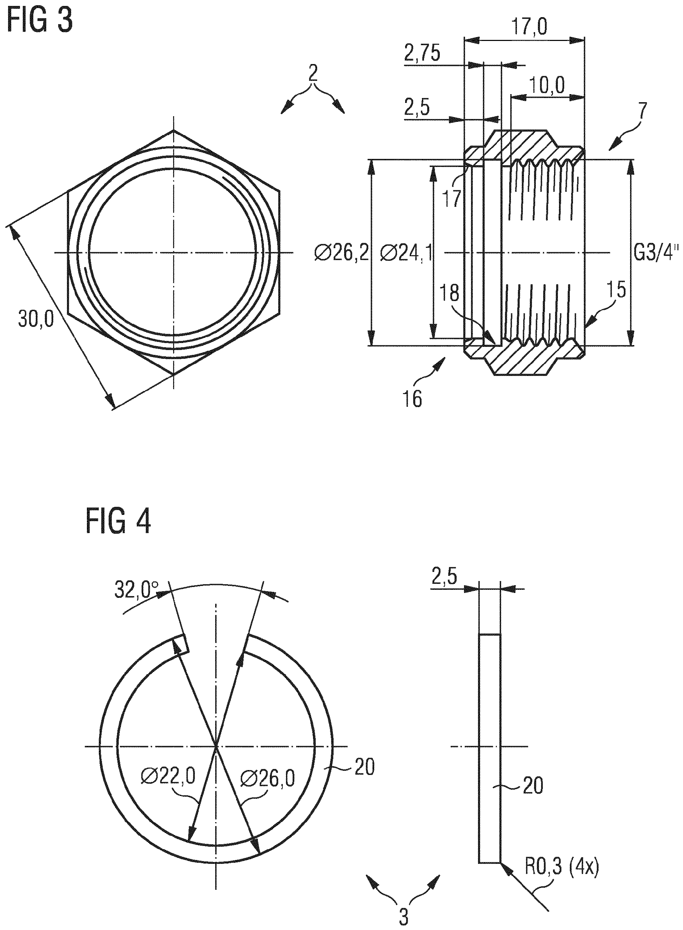

Die Figuren 1 und 2 zeigen eine maßstabsgetreue Schnittdarstellung bzw. Seitenansicht eines Anschlusses 1. Der Anschluss 1 umfasst unter anderem die in der Figur 3 dargestellte Überwurfmutter 2 sowie den in der Figur 4 dargestellten Haltering 3.

Im beschriebenen Ausführungsbeispiel handelt es sich bei dem Anschluss 1 um einen Teil eines Fittings 4 mit einen Grundkörper 5, beispielsweise einen Grundkörper eines Pressfittings zum Anschluss eines in den Figuren nicht dargestellten Wasserrohres aus einem Verbundstoff wie beispielsweise vernetztem Polyethylen (PEX). Der Grundkörper 5 weist einen an seinem Ende angeordneten, zylinderförmigen Anschlusskörper 6 mit einer Stirnseite 7 auf. Auf der Stirnseite 7 ist im Ausführungsbeispiel eine scheibenförmige Dichtung 8 zur Herstellung der Dichtigkeit des Anschlusses 1 angeordnet, die von einem Vorsprung 9 gehalten wird.

Der Anschlusskörper 6 endet stirnseitig mit einem vorspringenden Rand 10 in Form eines ringartigen Flansches. Für einen Anschlusses einer 3/4"-Verbindung weist der vorspringende Rand 10 beispielsweise einen Außendurchmesser von 24 mm gegenüber einem Außendurchmesser von 20mm in einem weiter hinten liegenden, rohrförmigen Bereich 11 des Anschlusskörpers 6 auf. Aus Richtung der Stirnseite 7 gesehen hinter dem vorspringenden Rand 10 liegt eine Vertiefung 12, die rückseitig von einer ringförmigen Wulst 13 begrenzt wird. Auch die Wulst 13 steht über den Außendurchmesser des Anschlusskörpers 6 in dem rohrförmigen Bereich 11 hinaus. Beispielsweise weist der Wulst einen Außendurchmesser von 22 mm auf. Zusammen bilden die Wulst 13 und die Vertiefung 12 einen Haltebereich 14.

Über dem Anschlusskörper 6 ist die Überwurfmutter 2 gemäß Figur 3 angeordnet. Die Überwurfmutter 2 weist einen geringfügig größeren Innendurchmesser auf als der Außendurchmesser des vorspringenden Rands 10. Im beschriebenen Ausführungsbeispiel weist sie beispielsweise einen Innendurchmesser von 24,1 mm auf, sodass die Überwurfmutter 2 über die Stirnseite 7 auf den Anschlusskörper 6 geschoben werden kann. In einen vorderen Bereich, der im aufgeschobenen Zustand in Richtung der Stirnseite 7 des Anschlusses 1 weist, weist die Überwurfmutter 2 ein Gewinde 15 für einen üblichen Schraubanschluss auf. Wie bereits ausgeführt, handelt es sich beispielsweise um ein Innengewinde zum Anschluss an einen in den Figuren nicht dargestellten Rohranschluss oder ein ebenfalls nicht dargestelltes weiteres Fitting mit einem 3/4"-Außengewinde. Alternativ kann selbstverständlich auch eine Überwurfmutter mit einem Außengewinde verwendet werden.

An einer gegenüberliegenden Rückseite 16 weist die Überwurfmutter 2 eine innenliegende Fase 17 auf. Des Weiteren ist an einer dem Haltebereich 14 des Anschlusskörpers 6 gegenüberliegenden Innenseite eine ringförmige Vertiefung 18 in die Überwurfmutter 2 eingearbeitet. Sie dient zur Befestigung und drehbaren Lagerung der Überwurfmutter 2 an dem Anschlusskörper 6. Hierzu ist in die Vertiefung 18 der Haltering 3 eingeführt, der zwischen der ringförmigen Vertiefung 18 und dem Haltebereich 14, umfassend die Wulst 13 und die Vertiefung 12, verrastet ist. Wie in der Figur 1 ersichtlich, kann der Haltering 3 von der Rückseite 16 der Überwurfmutter 2 in die ringförmige Vertiefung 18 eingeführt werden. Hierbei hilft die Fase 17 der Überwurfmutter 2 sowie ein konusförmiger Übergangsbereich 19 zwischen dem rohrförmigen Bereich 11 und der Wulst 13.

Figur 4 zeigt eine detaillierte Darstellung des Halterings 3 in einer frontalen und seitlichen Ansicht. Darin ist zu erkennen, dass der Haltering 3 im Wesentlichen aus einem geschlitzten Ringkörper 20 besteht. Der Schlitz des Ringkörpers 20 erstreckt sich über einen Winkelumfang von etwa 32°. Somit erstreckt sich der geschlitzte Ringkörper 20 über einen Winkelbereich von etwa 328°. Selbstverständlich sind auch größere und kleinere Öffnungen des geschlitzten Ringkörpers 20 möglich. Durch die Öffnung des geschlitzten Ringkörpers 20, gegebenenfalls in Verbindung mit dessen Materialeigenschaften, ist eine leichte Verformung des Halterings 3 in radialer Richtung möglich. Insbesondere kann dieser mittels der an der Rückseite 16 der Überwurfmutter 2 angebrachten Fase 17 leicht komprimiert und durch den nachfolgenden konusförmigen Übergangsbereich 19 im Durchmesser erweitert werden, um den Haltering 3 einfach in die ringförmige Vertiefung 18 einführen zu können.

Im Ausführungsbeispiel ist der Grundkörper 5 mit dem daran angeschlossenen Anschlusskörper 6 aus Polyphenylensulfon (PPSU) hergestellt. Der Haltering 3 besteht aus 6/6-Polyamid (PA). Die Überwurfmutter 2 ist aus einem Messingwerkstoff hergestellt. Sie kann mit handelsüblichen Werkzeugen mit entsprechenden Schraubverbindungen eines Rohranschlusses verbunden werden. Die Dichtung 8 besteht im Ausführungsbeispiel aus dem Dichtmaterial KLINGERsil C4400 der Klinger GmbH, Deutschland.

In den beschriebenen Ausgestaltungen ist lediglich die Überwurfmutter 2 aus einem Metallwerkstoff, insbesondere Messing, gefertigt. Es wird darauf hingewiesen, dass die Überwurfmutter 2 nicht in direktem Kontakt mit einem durch den Anschluss 1 geführten Medium, insbesondere Wasser, steht. Somit wird eine Korrosion des Metallwerkstoffs durch das Medium vermieden. Des Weiteren wird eine Verunreinigung des Mediums durch den Metallwerkstoff vermieden.

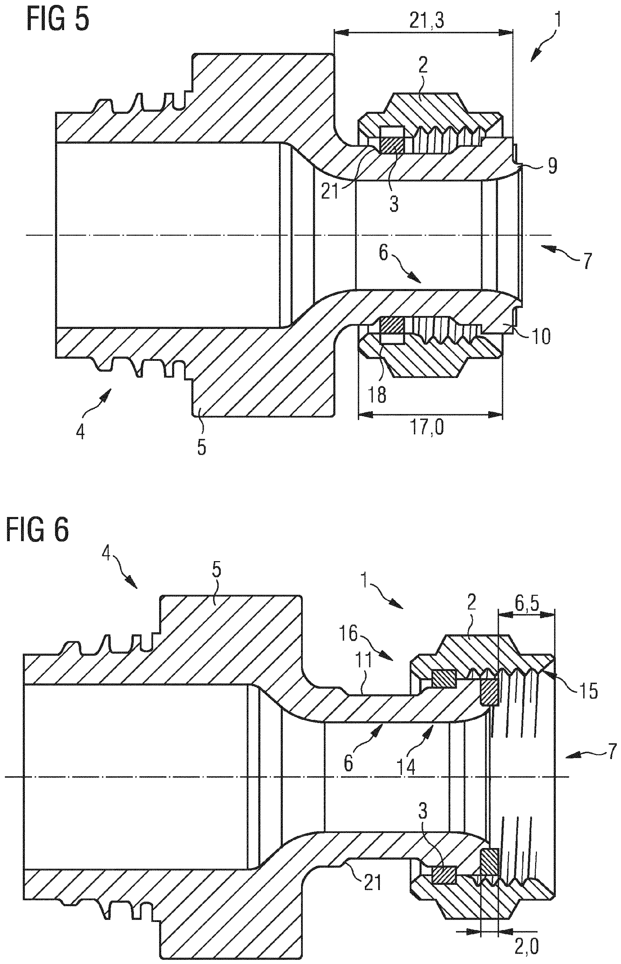

Es wird darauf hingewiesen, dass anstelle eines Metallwerkstoffs auch ein hinreichend harter Kunststoffwerkstoff, insbesondere ein Polymerwerkstoff wie PPSU, zur Herstellung der Überwurfmutter 2 verwendet werden kann. Umgekehrt kann der Haltering 3 auch aus korrosionsbeständigen Metallwerkstoffen hergestellt werden. Die Figuren 5 und 6 zeigen Schnittdarstellungen einer zweiten Ausgestaltung eines erfindungsgemäßen Anschlusses 1. Der Anschluss 1 ist an einem in der Form leicht abweichenden Grundkörper 5 eines weiteren Fittings 4 angeordnet. Der Anschluss 1 gemäß den Figuren 5 und 6 weist dabei im Wesentlichen dieselben Elemente wie der Anschluss 1 gemäß den Figuren 1 bis 4 auf. Auf eine erneute Beschreibung wird daher an dieser Stelle verzichtet.

Anhand der Darstellung der Figuren 5 und 6 ist ein alternatives Verfahren zum Befestigen der Überwurfmutter 2 an dem Anschlusskörper 6 zu erkennen. Insbesondere kann der Haltering 3 zunächst über den Anschlusskörper 6 geschoben werden, bis er diesen im rohrförmigen Bereich 11 mit dem im Ausführungsbeispiel geringsten Außendurchmesser des Anschlusskörpers 6 umgibt. Nachfolgend wird die Überwurfmutter 2 stirnseitig auf den Anschlusskörper 6 aufgesetzt und solange axial zurückgeschoben, bis der Haltering 3 gegen einen weiteren Vorsprung 21 des Anschlusskörpers 3 anschlägt. Wird die Überwurfmutter 2 weiter in axialer Richtung auf den Anschlusskörper 6 gepresst, verrastet der Haltering 3 zunächst in der ringförmigen Vertiefung 18. Dies ist in der Figur 5 dargestellt.

Nachfolgend kann die Überwurfmutter 2 zusammen mit dem Haltering 3 zurück in Richtung der Stirnseite 7 gezogen werden, bis der Haltering 3 in dem Haltebereich 14 hinter dem vorspringenden Rand 10 angeordnet ist. Dabei verhindert der vorspringende Rand 10 ein Abfallen der Überwurfmutter 2 von der Stirnseite 7 des Anschlusskörpers 3. Bevorzugt wird der Haltering 3 in dem Haltebereich 14 gehalten. Hierzu eignet sich beispielsweise eine Wulst 13 mit einer dahinterliegenden Vertiefung 12, wie sie bereits bezüglich des Ausführungsbeispiels nach Figur 1 beschrieben wurde. Dieser Zustand ist in der Figur 6 dargestellt.

Der in der Figur 5 dargestellte Zustand eignet sich auch zur Lagerung und zum Transport des Fittings 4. In diesem Zustand ist die Gesamtlänge des Fittings 4 gegenüber dem Zustand gemäß Figur 6 geringfügig reduziert. Darüber hinaus ist das Gewinde 15 der Überwurfmutter 2 vor Beschädigungen geschützt.

### Bezugszeichenliste

- 1: Anschluss
- 2: Überwurfmutter
- 3: Haltering
- 4: Fitting
- 5: Grundkörper
- 6: Anschlusskörper
- 7: Stirnseite
- 8: Dichtung
- 9: Vorsprung
- 10: vorspringender Rand
- 11: rohrförmiger Bereich
- 12: Vertiefung
- 13: Wulst
- 14: Haltebereich
- 15: Gewinde
- 16: Rückseite
- 17: Fase
- 18: ringförmige Vertiefung
- 19: konusförmiger Übergangsbereich
- 20: geschlitzter Ringkörper
- 21: weiterer Vorsprung

## Patentansprüche

1. Anschluss (1), insbesondere Rohranschluss, umfassend:
- einen Anschlusskörper (6) mit einer Stirnseite (7) und wenigstens einem stirnseitig angeordneten, vorspringenden Rand (10) und einem in axialer Richtung dahinterliegenden Haltebereich (14), wobei der vorspringende Rand (10) in Form eines ringartigen Flansches ausgestaltet ist;
- eine über den Anschlusskörper (6) geschobene Überwurfmutter (2) mit einer ringförmigen Vertiefung (18) in einem dem Haltebereich (14) des Anschlusskörpers (6) gegenüberliegenden Bereich, wobei der Innendurchmesser der Überwurfmutter (2) geringfügig größer als der Außendurchmesser des vorspringenden Rands (10) ist, sodass die Überwurfmutter (2) über die Stirnseite (7) auf den Anschlusskörper (6) geschoben werden kann; und
- einen in der ringförmigen Vertiefung (18) zwischen dem Anschlusskörper (6) und der Überwurfmutter (2) angeordneten Haltering (3), der die Überwurfmutter (2) drehbar an dem Anschlusskörper (6) festlegt,
**dadurch gekennzeichnet, dass**
- der Anschlusskörper (6) aus einem Kunststoffwerkstoff hergestellt ist; und
- die Überwurfmutter (2) eine innenliegende Fase (17) im Bereich einer Rückseite (16) der Überwurfmutter (2) aufweist, wobei der Haltering (3) bei einem axialen Einpressen des Halterings (3) von der der Stirnseite des Anschlusskörpers (6) gegenüberliegenden Rückseite (16) der Überwurfmutter (2) in die Vertiefung (18) mittels der Fase (17) komprimiert werden kann.

2. Anschluss (1) nach Anspruch 1, bei dem die Überwurfmutter (2) aus einem Metallwerkstoff, insbesondere Messing, gefertigt ist.

3. Anschluss (1) nach Anspruch 1 oder 2, bei dem der Haltering (3) aus einem Kunststoffwerkstoff, insbesondere einem Polymerwerkstoff, insbesondere einem Polyamid oder einem Polysulfonwerkstoff, hergestellt ist.

4. Anschluss (1) nach einem der Ansprüche 1 bis 3, bei dem der Anschlusskörper (6) aus einem Polymerwerkstoff, insbesondere einem Polysulfonwerkstoff, hergestellt ist.

5. Anschluss (1) nach einem der Ansprüche 1 bis 4, bei dem der Haltering (3) einen geschlitzten, elastischen Ringkörper (20) umfasst, wobei sich der Ringkörper (20) über einen Winkelbereich von weniger als 360°, insbesondere einen Winkelbereich zwischen 300 und 350°, erstreckt.

6. Anschluss (1) nach einem der Ansprüche 1 bis 5, bei dem der Anschlusskörper (6) im Haltebereich (14) eine zumindest teilweise umlaufende Wulst (13) und wenigstens eine zwischen der Wulst (13) und dem vorspringenden Rand (10) angeordnete Vertiefung (12) aufweist.

7. Anschluss (1) nach einem der Ansprüche 1 bis 6, bei dem das Anschlussstück einen Bereich (11) mit einem ersten Außendurchmesser und einen konusförmigen Übergangsbereich (19) zwischen dem rohrförmigen Bereich (11) und dem Haltebereich (14) aufweist, wobei der erste Außendurchmesser kleiner ist als ein zweiter Außendurchmesser des Haltebereichs (14).

8. Anschluss (1) nach einem der Ansprüche 1 bis 7, weiter umfassend eine auf einer Stirnseite (7) des Anschlusskörpers (6) innerhalb der Überwurfmutter (2) angeordnete Dichtung (8).

9. Fitting für eine Rohrverbindung mit einem Grundkörper (5) und wenigstens einem mit dem Grundkörper (5) verbundenen Anschluss (1) nach einem der Ansprüche 1 bis 8.

10. Fitting nach Anspruch 9, bei dem der Grundkörper (5) einstückig mit dem Anschlusskörper (6) des wenigstens einen Anschlusses (1) hergestellt ist.

11. Fitting nach Anspruch 9 oder 10, bei dem der Grundkörper (5) aus einem Kunststoffwerkstoff, insbesondere einem Polymerwerkstoff, insbesondere einem Polysulfonwerkstoff, hergestellt ist.

12. Verfahren zum Herstellen eines Anschlusses (1), umfassend die Schritte:
- Bereitstellen eines aus einem Kunststoffwerkstoff hergestellten Anschlusskörpers (6) mit einer Stirnseite (7) und wenigstens einem stirnseitig angeordneten, vorspringenden Rand (10) in Form eines ringartigen Flansches und einem in axialer Richtung dahinterliegenden Haltebereich (14);
- axiales Aufschieben einer Überwurfmutter (2) mit einer ringförmigen Vertiefung (18) von der Stirnseite (7) des Anschlusskörpers (6) auf den Anschlusskörper (6), wobei der Innendurchmesser der Überwurfmutter (2) geringfügig größer ist als der Außendurchmesser des vorspringenden Rands (10); und
- axiales Einpressen eines Halterings (3) von einer der Stirnseite (7) des Anschlusskörpers (6) gegenüberliegenden Rückseite (16) der Überwurfmutter (2) in die ringförmige Vertiefung (18) durch Komprimieren des Halterings (3) mittels einer an der Rückseite (16) der Überwurfmutter (2) angebrachten innenliegenden Fase (17), sodass die Überwurfmutter (2) drehbar an dem Anschlusskörper (6) gelagert ist.

13. Verfahren nach Anspruch 12, bei dem die Überwurfmutter (2) aus einem Metallwerkstoff, insbesondere Messing, gefertigt ist.

14. Verfahren nach Anspruch 12 oder 13, bei dem der Haltering (3) aus einem Kunststoffwerkstoff, insbesondere einem Polymerwerkstoff, insbesondere einem Polyamid oder einem Polysulfonwerkstoff, hergestellt ist.

## Claims

1. A connection (1), in particular a pipe connection, comprising:
- a connection body (6) having an end face (7) and at least one projecting periphery (10) arranged on the end face and a retaining region (14) located axially downstream thereof, wherein the projecting periphery (10) is designed in the form of an annular flange;
- a union nut (2) pushed over the connection body (6) having an annular depression (18) in a region located opposite the retaining region (14) of the connection body (6), wherein the internal diameter of the union nut (2) is slightly larger than the external diameter of the projecting periphery (10), so that the union nut (2) can be pushed on to the connection body (6) via the end face (7); and
- a retaining ring (3) arranged in the annular depression (18) between the connection body (6) and the union nut (2), which secures the union nut (2) in a rotatable manner on the connection body (6),
**characterized in that**
- the connection body (6) is produced from a plastics material; and
- the union nut (2) has an internal chamfer (17) in the region of a rear side (16) of the union nut (2), wherein, when the retaining ring (3) is pressed into the depression (18) axially from the rear side (16) of the union nut (2) located opposite the end face (7) of the connection body (6), the retaining ring (3) can be compressed by means of the chamfer (17).

2. The connection (1) according to claim 1, in which the union nut (2) is made from a metal material, in particular brass.

3. The connection (1) according to claim 1 or 2, in which the retaining ring (3) is produced from a plastics material, in particular a polymer material, in particular a polyamide or a polysulfone material.

4. The connection (1) according to one of claims 1 to 3, in which the connection body (6) is produced from a polymer material, in particular a polysulfone material.

5. The connection (1) according to one of claims 1 to 4, in which the retaining ring (3) comprises a slit, elastic annular body (20), wherein the annular body (20) extends over an angle range of less than 360°, in particular an angle range of between 300 and 350°.

6. The connection (1) according to one of claims 1 to 5, in which the connection body (6), in the retaining region (14), has an at least partially encircling bead (13) and at least one depression (12) arranged between the bead (13) and the projecting periphery (10).

7. The connection (1) according to one of claims 1 to 6, in which the connection piece has a region (11) with a first external diameter and a conical transition region (19) between the tubular region (11) and the retaining region (14), wherein the first external diameter is smaller than a second external diameter of the retaining region (14).

8. The connection (1) according to one of claims 1 to 7, further comprising a seal (8) arranged on an end face (7) of the connection body (6) within the union nut (2).

9. A fitting for a pipe joint, having a basic body (5) and at least one connection (1) according to one of claims 1 to 8 connected to the basic body (5).

10. The fitting according to claim 9, in which the basic body (5) is produced in one piece with the connection body (6) of the at least one connection (1).

11. The fitting according to claim 9 or 10, in which the basic body (5) is produced from a plastics material, in particular a polymer material, in particular a polysulfone material.

12. A method of producing a connection (1), comprising the following steps:
- providing a connection body (6) produced from a plastics material, having an end face (7) and at least one projecting periphery (10) in the form of an annular flange arranged on the end face (7), and having a retaining region (14) located axially downstream thereof;
- pushing a union nut (2) having an annular depression (18) on to the connection body (6) axially from the end face (7) of the connection body (6), wherein the internal diameter of the union nut (2) is slightly larger than the external diameter of the projecting periphery (10); and
- pressing a retaining ring (3) axially into the annular depression (18) from a rear side (16) of the union nut (2) located opposite the end face (7) of the connection body (6) by compressing the retaining ring (3) by means of an internal chamfer (17) arranged on the rear side (16) of the union nut (2), so that the union nut (2) is mounted in a rotatable manner on the connection body (6).

13. The method according to claim 12, in which the union nut (2) is made from a metal material, in particular brass.

14. The method according to claim 12 or 13, in which the retaining ring (3) is produced from a plastics material, in particular a polymer material, in particular a polyamide or a polysulfone material.

## Revendications

1. Raccordement (1), en particulier un raccordement de tube, comprenant :
- un corps de raccordement (6) avec un côté frontal (7) et au moins un rebord en saillie (10) agencé du côté frontal et une zone de retenue (14) située là-derrière en direction axiale, le rebord en saillie (10) étant conçu sous forme d'une bride annulaire ;
- un écrou-raccord (2) enfilé sur le corps de raccordement (6) avec une cavité (18) circulaire dans une zone opposée à la zone de retenue (14) du corps de raccordement (6), le diamètre intérieur de l'écrou-raccord (2) étant faiblement supérieur au diamètre extérieur du rebord en saillie (10) de sorte que l'écrou-raccord (2) peut être enfilé sur le corps de raccordement (6) via le côté frontal (7) ; et
- un anneau de retenue (3) disposé dans la cavité circulaire (18) entre le corps de raccordement (6) et l'écrou-raccord (2), lequel anneau fixe l'écrou-raccord (2) de manière à pouvoir tourner sur le corps de raccordement (6),
**caractérisé en ce que**
- le corps de raccordement (6) est fabriqué á partir d'un matériau plastique ; et
- l'écrou-raccord (2) comprend un chanfrein intérieur (17) dans la zone d'un côté arrière (16) de l'écrou-raccord (2), l'anneau de retenue (3) pouvant être comprimé dans la cavité (18) au moyen du chanfrein (17) en enfonçant axialement l'anneau de retenue (3) depuis la côté arrière opposée au côté frontal du corps de raccordement (6) de l'écrou-raccord (2).

2. Raccordement (1) selon la revendication 1, dans lequel l'écrou-raccord (2) est fabriqué á partir d'un métal, en particulier du laiton.

3. Raccordement (1) selon l'une quelconque des revendications 1 ou 2, dans lequel l'anneau de retenue (3) est fabriqué á partir d'un matériau plastique, en particulier un polymère, en particulier d'un polyamide ou d'un matériau polysulfone.

4. Raccordement (1) selon l'une quelconque des revendications 1 à 3, dans lequel le corps de raccordement (6) est fabriqué à partir d'un polymère, en particulier d'un matériau polysulfone.

5. Raccordement (1) selon l'une quelconque des revendications 1 à 4, dans lequel l'anneau de retenue (3) comporte un corps annulaire (20) élastique et fendu, le corps annulaire (20) s'étendant sur une plage angulaire de moins de 360°, en particulier sur une plage angulaire comprise entre 300 et 350°.

6. Raccordement (1) selon l'une quelconque des revendications 1 à 5, dans lequel le corps de raccordement (6) présente, dans la zone de retenue (14), un bourrelet au moins en partie périphérique (13) et au moins un creux (12) agencé entre le bourrelet (13) et le rebord en saillie (10).

7. Raccordement (1) selon l'une quelconque des revendications 1 à 6, dans lequel la pièce de raccordement comprend une zone (11) avec un premier diamètre extérieur et une zone transitoire conique (19) entre la zone tubulaire (11) et la zone de retenue (14), le premier diamètre extérieur étant inférieur à un deuxième diamètre extérieur de la zone de retenue (14).

8. Raccordement (1) selon l'une quelconque des revendications 1 à 7, comprenant en outre un joint (8) disposé sur un côté frontal (7) du corps de raccordement (6) à l'intérieur de l'écrou-raccord (2).

9. Raccord pour une connexion tubulaire avec un corps de base (5) et au moins un raccordement (1) relié au corps principal (5) selon l'une quelconque des revendications 1 à 8.

10. Raccord selon la revendication 9, dans lequel le corps principal (5) est fabriqué d'une seule pièce avec le corps de raccordement (6) d'au moins un raccordement (1).

11. Raccord selon l'une quelconque des revendications 9 ou 10, dans lequel le corps principal (5) est fabriqué á partir d'un matériau plastique, en particulier d'un matériau polymère, en particulier d'un matériau polysulfone.

12. Procédé pour la fabrication d'un raccordement (1), comprenant les étapes :
- fournir d'un corps de raccordement (6) fabriqué á partir d'un matériau plastique avec un côté frontal (7) et au moins un rebord en saillie (10) sous forme de bride annulaire et agencé du côté frontal et une zone de retenue (4) située là-derrière en direction axiale,
- enfiler axialement un écrou-raccord (2) avec une cavité circulaire (18) depuis le côté frontal (7) du corps de raccordement (6) sur le corps de raccordement (6), le diamètre intérieur de l'écrou-raccord (2) étant faiblement supérieur au diamètre extérieur du rebord en saillie (10) ; et
- enfoncement axial d'un anneau de retenue (3) depuis une côté arrière (16) de l'écrou-raccord (2) opposée au côté frontal (7) du corps de raccordement (6) dans la cavité circulaire (18) par comprimer l'anneau de retenue (3) au moyen d'un chanfrein intérieur (17) attachée sur le côté arrière (16) de l'écrou-raccord (2), de sorte que l'écrou-raccord (2) est monté de manière à pouvoir tourner sur le corps de raccordement (6).

13. Procédé selon la revendication 12, dans lequel l'écrou-raccord (2) est fabriqué à partir d'un métal, en particulier du laiton.

14. Procédé selon les revendications 12 ou 13, dans lequel l'anneau de retenue (3) est fabriqué á partir d'un matériau plastique, en particulier d'un matériau polymère, en particulier d'un matériau polyamide ou un polysulfone.
